# EUROPEAN PATENT SPECIFICATION

(11) **EP 3 402 971 B1**
(45) Date of publication and mention of the grant of the patent: **24.03.2021**
(21) Application number: 16885286.1
(22) Date of filing: 13.12.2016
(51) Int. Cl.: F02B 29/04, F01P 5/02, F01P 3/18, F01P 5/04, B60K 11/04, F01P 11/10, B60K 1/00

(54) **A FAN ARRANGEMENT IN A VEHICLE**
VENTILATORANORDNUNG IN EINEM FAHRZEUG
AGENCEMENT DE VENTILATEUR DANS UN VÉHICULE

(30) Priority: 15.01.2016 SE 1650042
(43) Date of publication of application: 21.11.2018
(73) Proprietor: Scania CV AB, 151 87 Södertälje (SE)
(72) Inventor: KARDOS, Zoltan, 151 35 Södertälje (SE); HALL, Ola, 117 67 Stockholm (SE)
(74) Representative: Scania CV AB
(86) International application number: PCT/SE2016/051254
(87) International publication number: WO 2017/123131

(56) References cited:
- EP-A1- 2 875 979
- EP-A1- 2 875 979
- WO-A1-2007/126372
- WO-A1-2007/126372
- DE-A1- 3 702 267
- DE-A1- 3 820 163
- DE-A1- 3 820 163
- DE-A1- 19 910 651
- DE-A1-102011 006 350
- JP-A- S5 910 727
- JP-A- 2008 106 727
- JP-A- 2008 106 727
- US-A- 5 234 051
- US-A1- 2010 116 229

## Description

### BACKGROUND OF THE INVENTION AND PRIOR ART

The present invention relates to a vehicle according to claim 1.

An AC system is commonly used to cool the cab space in a vehicle. AC systems comprise a cooling circuit with a circulating refrigerant. The circulating refrigerant cools the air in the cab space when it vaporizes in an evaporator and gives off heat to surrounding air when it condenses in a condenser. The condenser is usually situated at the front portion of the vehicle near to the radiator in which the coolant in the engine's cooling system is cooled. During operation, air is drawn through the condenser and the radiator by a radiator fan driven by the engine. The engine also drives a compressor which compresses and circulates the refrigerant in the AC system.

It is often desired to use the AC system in the vehicle even at times when the engine is not running. A known practice in this respect is to run the compressor on electrical energy and use an electrically driven fan to force a cooling air flow through the condenser. However, there is usually no space for an electrically driven fan in a position close to the ordinary condenser. AC systems are known to be equipped with an additional condenser and an electrically driven fan located at a distance from the ordinary condenser for operation of the AC system when the engine is not running. The existence of two condensers increases the number of components of the AC system at the same time as it complicates the operation of the AC system.

The amount of air which can be supplied to a supercharged combustion engine depends on the pressure of the air but also on the temperature of the air. Therefore, the charged air is cooled in a charged air cooler before it is enters the combustion engine. The charged air cooler may be arranged at a front portion of a vehicle where it is cooled by ambient air. When ambient air has a low temperature, the charged air can be cooled to a temperature below the dew point temperature of the air. In this case, liquid water is formed in the charge air cooler. When ambient air temperature is below 0°C, there is also risk that the liquid water freezes to ice in the charge air cooler. Such ice formation will cause a greater or lesser amount of obstruction of the airflow ducts within the charge air cooler, resulting in a reduced flow of air to the combustion engine and consequent operational malfunctions or stoppages.

DE 10 2011 006 350 A1 shows a fan arrangement for moving cool air into an air path through a cooling module. The fan arrangement comprises a fan shroud including a main fan driven by an engine and a number of electrically driven fans arranged in parallel to the main fan. The electrically driven fans provide complementary air paths at the side of a main air path provided by the main fan. Such a positioning of the electrically driven fans is space consuming since it requires a wider flow channel in order to accommodate the electrically driven fans.

US 2010/116229 A1 shows a cooling device for a vehicle where the driving force of the cooling air flow can be selected from either an electric fan or a fan driven by the engine in accordance with preset conditions.

EP 2875979 A1 shows a heat exchanger being adapted for air to flow through it and being adapted to be selectively employed as a refrigerant condenser or a refrigerant evaporator, and a fan being configured to be reversible and in a first operating mode delivering fresh air toward the engine compartment and in a second operating mode delivering air from the engine compartment toward the fresh air opening.

JP 2008106727 A shows a vehicle having a fan 26 which can be rotated reversibly in order to close shutters 32, 33 against the ram air.

WO 2007126372 A1 shows a radiator fan arrangement for a vehicle 2 which is powered by a combustion engine 2. The radiator fan arrangement comprises a first radiator fan for cooling a cooling element 9, 13, 19 and an extra radiator fan 22, 29 adapted generate an increased air flow in situations where the first radiator fan 20, 26 cannot provide sufficient air flow.

### SUMMARY OF THE INVENTION

The object of the present invention is to add at least one electrically driven fan to a radiator fan in a vehicle where the existence of the additional electrically driven fan does not require any extra space in the vehicle.

The above mentioned object is achieved by the fan arrangement of the vehicle according to claim 1. A cooling module in a vehicle may comprise a radiator and at least one other cooler defined as further cooler. During certain occasions, it is desired to provide an air flow through the further cooler when the radiator fan is not in operation. However, it is a problem to find a suitable mounting position for such an additional fan. The area in front of the further cooler is usually occupied by a grille. The area behind the further cooler is usually occupied by the radiator or another cooler. However, there is usually an empty space between the radiator and the radiator fan inside the fan shroud where it is possible to arrange an additional electrically driven fan. In this case, the additional electrically driven fan is not positioned adjacent to the further cooler but it is possible to provide an air flow through the radiator and the further cooler by the additional fan. The fan and the electrical engine may be mounted as a unit in this empty space.

According to an embodiment of the invention, the electrically driven fan is arranged in the flow passage in a position closer to the radiator than to the radiator fan. A positioning of the additional electrically driven fan adjacent to the radiator makes it easier to provide a relatively concentrated air flow through the radiator and the further cooler on the opposite side of the radiator. The additional electrically driven fan may be arranged in a part of the flow passage defined by a fan cover of the radiator fan. A radiator fan is usually provided with a fan cover in order to provide an efficient air flow through the radiator fan. Such a fan cover provides an empty space in front of the radiator fan where it is possible to arrange one or several additional electrically driven fans.

The fan arrangement comprises at least one component configured to provide an air channel defining said restricted portion of the flow passage. It is desired to use a relatively small additional fan which does not require a large supply of electrical energy. As a consequence, the additional electrically driven fan is not able to provide an air flow through the entire flow passage and through the entire cooling module. By means of an air channel within flow passage, it is possible to provide a concentrated air flow through a relevant part of the further cooler by means of a relatively small additional fan. The air channel may be defined by an annular element arranged in a space between the further cooler and the radiator. In this case, it is possible to provide a substantially leak free air flow between the further cooler and the additional fan via the radiator. The annular element may be manufactured of a suitable plastic material. Preferably, the annular element is attachable to the further cooler and the radiator. The annular elements may be provided with projecting fastening portions which are attachable in the flow channels of the cooler/radiator.

The cooling module comprises at least one additional further cooler. The further coolers may be a condenser of an AC system, a charged air cooler, an EGR cooler, oil cooler etc. The air channel is defined by an annular element arranged in a space between the two coolers. Also in this case, the annular element may include fastening portion for attachment to the respective cooler. In this case, it is possible to provide a substantially leak free air flow by the additional fan between the two further coolers. The air channel may be defined by a fan cover of the additional electrically driven fan. Such a fan cover may define a substantially leak free part of the air channel between the radiator and the additional electrically driven fan.

According to the invention, the additional electrically driven fan is able to provide an air flow through the restricted portion of the flow passage in an opposite direction to the intended flow direction through the flow passage. Such an additional electrically driven fan may be reversible in its direction of rotation such that it is also able to provide an air flow in the intended flow direction of the flow passage.

The further cooler is a charge air cooler cooling charge air delivered to the combustion engine, wherein the additional electrically driven fan is configured to provide an air flow through the restricted portion of the flow passage and the charge air cooler in the opposite direction to the intended flow direction through the flow passage during occasion when there is risk for ice formation in the charge air cooler. In this case, it is possible to direct relatively warm air from the engine room of the vehicle to the charged air cooler in order to melt possible ice formations in the charge air cooler.

### BRIEF DESCRIPTION OF THE DRAWING

In the following a preferred embodiment of the invention is described, as an example, with reference to the attached drawings, in which:
- Fig. 1: shows a front view of a cooling module in a vehicle comprising a fan arrangement according the invention and
- Fig. 2: shows a cross-sectional view of the cooling module in the plane A-A in Fig. 1.

### DETAILED DESCRIPTION OF A PREFERRED EMBODIMENT OF THE INVENTION

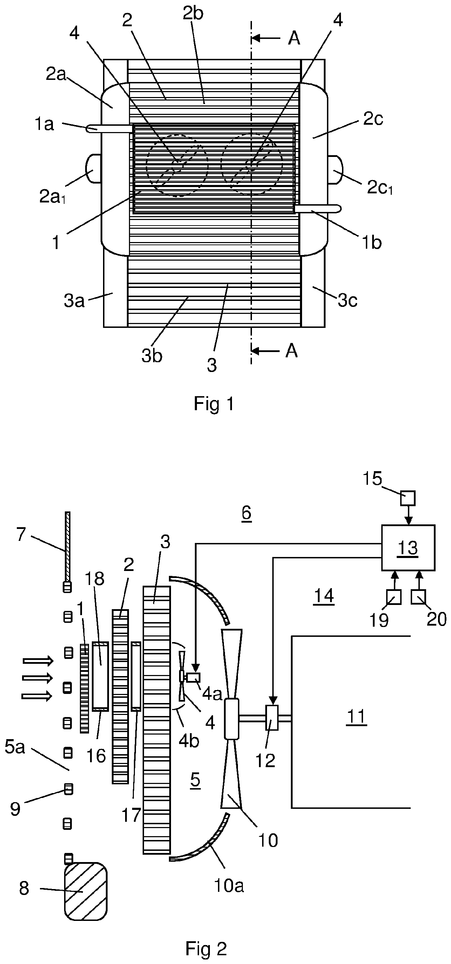

Fig. 1 shows a front view of a cooling module. The cooling module comprises a condenser 1 of an AC system in a front position. The condenser 1 receives a gaseous refrigerant via an inlet line 1a. The refrigerant is cooled in the condenser 1 by a cooling air flow to a temperature at which it condenses. The liquefied refrigerant leaves the condenser 1 via an outlet line 1b. A charge air cooler 2 is arranged in a position behind the condenser 1. The charge air cooler 2 comprises an inlet tank 2a, a cooling portion 2b and an outlet tank 2c. Charged air is delivered to the inlet tank 2a via an inlet conduit 2a₁. The charged air is cooled in the cooling portion 2b by a cooling air flow. The cooled charged air is received in the outlet tank 2c before it leaves the charge air cooler 2 via an outlet conduit 2c₁. A radiator 3 is arranged in a position behind the charge air cooler 2. The radiator 3 comprises an inlet tank 3a, a cooling portion 3b and an outlet tank 3c. Coolant is received in the inlet tank 3a. The coolant is delivered to the cooling portion 3b where it is cooled by a cooling air flow. The cooled coolant is received in the outlet tube 1c before it leaves the radiator 3. Two additional fans 4 are indicated with dotted lines. The additional fans 4 are arranged behind the radiator 3. The additional fans 4 are operated by means of a respective electric engine 4a. The fans 4 and the electric engine 4a are mounted as a unit in a position close to the radiator 3. The fans 4 and the electrical engines 4a may be mounted by means of suitable mounting profiles attached to the inlet tank 3a and the outlet tank 3c of the radiator 3.

Fig.2 show a cross-sectional view in the plane A-A in Fig. 1. The condenser 1, the charge air cooler 2 and the radiator 3 is arranged in a flow passage 5 in a vehicle 6 which may be a heavy vehicle. The flow passage 5 comprises an opening 5a arranged in a front portion of the vehicle 5. A front wall 7 of the vehicle and a bumper 8 defines the opening 5a of the flow passage 5. A grille 9 is arranged in the opening 5a. The grille 9 is, in this case, defined by a number of vertical bars having a parallel extension across the opening 5a of the air passage 5. A radiator fan 10 is configured to provide a cooling air flow through the cooling module in the flow passage 5. The radiator fan 10 is driven by a combustion engine 11 via a clutch 12. A control unit 13 controls the engagement and the disengagement of the clutch 12.

The combustion engine 11 is arranged in an engine room 14 of the vehicle 6. The control unit 13 receives substantially continuously information from a temperature sensor 15 about the temperature of coolant which is cooled in the radiator 3 and which cools the combustion engine 11. The control unit 13 starts the radiator fan 10 when the coolant has a temperature above a predetermined temperature. During operation, the radiator fan 10 provides an air flow in an intended flow direction through the flow passage 5. The air flow constitutes of ambient air which it directed into the flow passage 5, via the inlet opening 5a. In the flow passage 5, the air flows through the condenser 1, the charge air cooler 2 and the radiator 3. The air flow cools the refrigerant in the condenser 1, the charge air in the charge air cooler 2 and the coolant in the radiator 3.

The condenser 1 is arranged in the flow passage 5 in a position relatively close to the inlet opening 5a and the grille 9. The charge air cooler 2 is arranged at a distance behind the condenser 1. A first annular element 16 is arranged in the space between the condenser 1 and the charge air cooler 2. The first annular element 16 is attached on the condenser 1 and/or the charge air cooler 2. The radiator 3 is arranged at a distance behind the charge air cooler 2. A second annular element 17 is arranged in the space between the charge air cooler 2 and the radiator 3. The second annular element 17 is attached on the charge air cooler 2 and/or the radiator. The first annular element 16 and the second annular element 17 forms together with air flow passages through the condenser 1, air flow passages through the charge air cooler 2, air flow passages through the radiator 3 and a fan cover 4b of the additional fan 4 an air channel 18 in a restricted portion of the flow passage 5. Each additional fan 4 is configured to provide an air flow through such an air channel 18. The control unit 13 controls the activation of the electric engine 4a and the speed of the additional fan 4. The speed of the additional electrically driven fans may be regulated in a stepless manner. The additional fans 4 are reversible in its direction of rotation. Thus, it is possible to provide an air flow through the air channel 18 in the intended flow direction through the flow passage 5 and in an opposite direction to the intended flow direction through the flow passage 5.

The use of the additional fans 4 has several applications. When a driver wishes to take a break a warm day, it is possible to start the AC system when the combustion engine is not in operation. In this case, the driver can indicate start of the AC system by means of a button 19 or the like. When this is indicated, the control unit 13 initiates supply of electrical energy from a battery or the like in the vehicle 6 to a compressor of the AC system and to the electrical engines 4a powering the additional electrically driven fans 4. The additional fans 4 start and they provide an air flow through the respective air channel 18 in the intended flow direction through the air passage 5. Ambient air is sucked into the flow passages 5, via the opening 5a, and through the air channels 18. The air flow through the air channels 18 provides a required cooling of the refrigerant in the condenser 1. The annular elements 16, 17 and the fan cover 4b of the additional fans 4, define a substantially tight air channel 18. By means of such air channels 18, it is possible to provide concentrated air flows through relevant parts of the condenser 1. Substantially the whole air flow provided by the respective additional fans 4 is directed through the condenser 1. As a consequence, it is possible to use additional electrically driven fans 4 with a relatively small capacity. It is usually an empty space in the flow passage 5 in a position between the radiator 5 and the radiator fan 10 which is defined by the radiator fan cover 10a. The additionally fans 4 and the electrical engines 4a are arranged in this space. Consequently, the additional fans 4 are arranged in a downstream position of the radiator 3 and in an upstream position of the radiator fan 10 with respect to the intended flow direction through the flow passage 5.

Another application of the additionally fans 4, it is when the combustion engine is operated and ambient air has a very low temperature. During such occasions, the radiator fan is usually not driven. Since the combustion engine is operated, charged air is directed to the charge air cooler 2. During such occasions, the water vapor in the charge air may be liquefied and frozen in the charge air cooler 2. If it occurs, the supply of charge air to the combustion engine 11 will be reduced and possibly ceased. In order to avoid this risk, the control unit 13 may receive information from a temperature sensor 20 about ambient temperature or the temperature of the charged air leaving the charge air cooler 2. In case the received temperature indicates such a risk, the control unit 13 activates the additionally fans 4 such that they provide an air flow in the flow channels 18 in an opposite direction to the intended flow direction through the flow passage 5. As a consequence, the additional fan 4 provide an air flow from the engine room 14 and through the air channels 18. The air flows in the air channels 18 are directed through the radiator 3, the charged air cooler 2 and the condenser 1. The air inside the engine room 14 has usually a considerably higher temperature than ambient air since it is in contact with the combustion engine 11. Consequently, relatively hot air flows from the engine room 14 and through the charge air cooler 2 where it melt possible ice formations.

Finally, it is possible to use the additionally fans 4 instead of the radiator fan 10 for cooling of the refrigerant in the condenser 1 during certain operating conditions such as city driving. In city traffic, the ram air flow through the condenser 1 is many time too low for cooling the refrigerant. In this case, it is possible to start the additional fans 4 instead of the radiator fan 10 for cooling the refrigerant in the condenser 1. In case the additional fans 4 are dimensioned for this purpose, it is usually more energy efficient to start them than to start the considerably larger radiator fan 10.

The invention is not restricted to the described embodiment but may be varied freely within the scope of the claims. The cooling module may, for example, comprise a variable number of coolers.

## Claims

1. A vehicle comprising a combustion engine (11), a fan arrangement and a cooling module arranged in a flow passage (5) in the vehicle, wherein the fan arrangement comprises a radiator fan (10) driven by the combustion engine (11) and configured to provide an air flow in an intended direction through the flow passage (5) and the cooling module, wherein the cooling module comprises a radiator (3) of a cooling system cooling a combustion engine (11) and at least one further cooler (1, 2) arranged in an upstream position of the radiator (3) with respect to said intended flow direction through the flow passage (5), wherein the fan arrangement comprises at least one additional electrically driven fan (4), wherein the at least one additional electrically driven fan (4) is arranged in the flow passage (5) in a position downstream of the radiator (3) and upstream of the radiator fan (10) with respect to said intended flow direction through the flow passage (5) and wherein the at least one additional electrically driven fan (4) is configured to provide an air flow through a restricted portion (18) of the flow passage (5) and the cooling module during certain occasions when the radiator fan (10) is not in operation, wherein the at least one additional electrically driven fan (4) is able to provide an air flow through the restricted portion (18) in an opposite direction to the intended flow direction through the flow passage (5) and wherein the further cooler is a charge air cooler (2) cooling charge air delivered to the combustion engine (11), wherein the electrically driven fan (4) is configured to provide an air flow through the restricted portion (18) of the flow passage (5) and the charge air cooler (2) in the opposite direction to the intended flow direction through the flow passage (5) during occasion when there is risk for ice formation in the charge air cooler (2), wherein the vehicle further comprises a control unit (13) configured to receive information from a temperature sensor (20) about ambient temperature or the temperature of the charged air leaving the charge air cooler (2) and activate the at least one additional electrically driven fan (4) such that it provides the air flow through the restricted portion (18) in the opposite direction to the intended flow direction through the flow passage (5) in case the received temperature indicates a risk for ice formation in the charge air cooler (2), wherein the fan arrangement comprises at least one component configured to provide an air channel (18) defining said restricted portion of the flow passage (5) and the cooling module comprises at least one additional further cooler (1, 2), and wherein said air channel (18) within the flow passage (5) is defined by an annular element (16) arranged in a space between said two coolers (1, 2).

2. A vehicle according to claim 1, **characterized in that** the at least one additional electrically driven fan (4) is arranged in the flow passage (5) in a position closer to the radiator (3) than to the radiator fan (10).

3. A vehicle according to claim 1 or 2, **characterized in that** the at least one additional electrically driven fan (4) is arranged in a part of the flow passage (5) defined by a fan cover (10a) of the radiator fan (10).

4. A vehicle according to any one of the preceding claims, **characterized in that** said air channel (18) within the flow passage (5) is further defined by an annular element (17) arranged in a space between the further cooler (2) and the radiator (3).

5. A vehicle according to any one of the preceding claims, **characterized in that** said air channel (18) within the flow passage (5) is further defined by a fan cover (4b) of the at least one additional electrically driven fan (4).

6. A vehicle according to any one of the preceding claims, **characterized in that** the at least one additional electrically driven fan (4) is reversible in its direction of rotation.

## Patentansprüche

1. Fahrzeug mit einem Verbrennungsmotor (11), einer Ventilatoranordnung und einem in einem Strömungsdurchgang (5) in dem Fahrzeug angeordneten Kühlmodul, wobei die Ventilatoranordnung einen Kühlerventilator (10) aufweist, der von dem Verbrennungsmotor (11) angetrieben und dazu eingerichtet ist, einen Luftstrom in einer vorgesehenen Richtung durch den Strömungsdurchgang (5) und das Kühlmodul zu liefern, wobei das Kühlmodul einen Motorkühler (3) eines einen Verbrennungsmotor (11) kühlenden Kühlsystems und wenigstens einen weiteren Kühler (1, 2) umfasst, der hinsichtlich der vorgesehenen Strömungsrichtung durch den Strömungsdurchgang (5) an einer Stelle stromaufwärts des Motorkühlers (3) angeordnet ist, wobei die Ventilatoranordnung mindestens einen zusätzlichen, elektrisch angetriebenen Ventilator (4) aufweist, wobei der mindestens eine zusätzliche, elektrisch angetriebene Ventilator (4) hinsichtlich der vorgesehenen Strömungsrichtung durch den Strömungsdurchgang (5) in dem Strömungsdurchgang (5) an einer Stelle stromabwärts des Motorkühlers (3) und stromaufwärts des Kühlerventilators (10) angeordnet ist, und wobei der mindestens eine zusätzliche, elektrisch angetriebene Ventilator (4) dazu eingerichtet ist, einen Luftstrom durch einen begrenzten Teil (18) des Strömungsdurchgangs (5) und des Kühlmoduls während bestimmter Gelegenheiten zu liefern, wenn der Kühlerventilator (10) nicht in Betrieb ist, wobei der mindestens eine zusätzliche, elektrisch angetriebene Ventilator (4) dazu in der Lage ist, einen Luftstrom durch den begrenzten Teil (18) in einer der vorgesehenen Strömungsrichtung durch den Strömungsdurchgang (5) entgegengesetzten Richtung zu liefern, und wobei der weitere Kühler ein Ladeluftkühler (2) ist, der dem Verbrennungsmotor (11) zugeführte Ladeluft kühlt, wobei der elektrisch angetriebene Ventilator (4) dazu eingerichtet ist, einen Luftstrom durch den begrenzten Teil (18) des Strömungsdurchgangs (5) und den Ladeluftkühler (2) in der der vorgesehenen Strömungsrichtung durch den Strömungsdurchgang (5) entgegengesetzten Richtung dann zu liefern, wenn in dem Ladeluftkühler (2) eine Gefahr einer Eisbildung besteht, wobei das Fahrzeug ferner eine Steuereinheit (13) aufweist, die dazu eingerichtet ist, Information von einem Temperatursensor (20) über eine Umgebungstemperatur oder die Temperatur der den Ladeluftkühler (2) verlassenden Ladeluft zu erhalten und den mindestens einen zusätzlichen, elektrisch angetriebenen Ventilator (4) zu aktivieren, sodass er den Luftstrom durch den begrenzten Teil (18) in der der vorgesehenen Strömungsrichtung durch den Strömungsdurchgang (5) entgegengesetzten Richtung liefert, falls die empfangene Temperatur eine Gefahr einer Eisbildung in dem Ladeluftkühler (2) anzeigt, wobei die Ventilatoranordnung wenigstens ein Bauteil umfasst, das dazu eingerichtet ist, einen Luftkanal (18) bereitzustellen, der den begrenzten Teil des Strömungsdurchgangs (5) definiert, und das Kühlmodul wenigstens einen zusätzlichen weiteren Kühler (1, 2) aufweist, und wobei der Luftkanal (18) mit dem Strömungsdurchgang (5) durch ein ringförmiges Element (16) festgelegt ist, das in einem Raum zwischen den zwei Kühlern (1, 2) angeordnet ist.

2. Fahrzeug nach Anspruch 1, **dadurch gekennzeichnet, dass** der mindestens eine zusätzliche, elektrisch angetriebene Ventilator (4) sich in dem Strömungsdurchgang (5) an einer Stelle befindet, die dem Motorkühler (3) näher ist als dem Kühlerventilator (10).

3. Fahrzeug nach Anspruch 1 oder 2, **dadurch gekennzeichnet, dass** der mindestens eine zusätzliche, elektrisch angetriebene Ventilator (4) in einem Teil des Strömungsdurchgangs (5) angeordnet ist, der durch eine Ventilatorabdeckung (10a) des Kühlerventilators (10) festgelegt ist.

4. Fahrzeug nach einem der vorhergehenden Ansprüche, **dadurch gekennzeichnet, dass** der Luftkanal (18) innerhalb des Strömungsdurchgangs (5) des Weiteren durch ein ringförmiges Element (17) festgelegt ist, das in einem Raum zwischen dem weiteren Kühler (2) und dem Motorkühler (3) angeordnet ist.

5. Fahrzeug nach einem der vorhergehenden Ansprüche, **dadurch gekennzeichnet, dass** der Luftkanal (18) innerhalb des Strömungsdurchgangs (5) des Weiteren festgelegt ist durch eine Ventilatorabdeckung (4b) des mindestens einen zusätzlichen, elektrisch angetriebenen Ventilators (4).

6. Fahrzeug nach einem der vorhergehenden Ansprüche, **dadurch gekennzeichnet, dass** der mindestens eine zusätzliche, elektrisch angetriebene Ventilator (4) in seiner Drehrichtung umkehrbar ist.

## Revendications

1. Véhicule comprenant un moteur à combustion (11), un agencement de ventilateur et un module de refroidissement agencé dans un passage de flux (5) dans le véhicule, dans lequel l'agencement de ventilateur comprend un ventilateur de radiateur (10) entraîné par le moteur à combustion (11) et configuré pour fournir un flux d'air dans une direction prévue à travers le passage de flux (5) et le module de refroidissement, dans lequel le module de refroidissement comprend un radiateur (3) d'un système de refroidissement refroidissant un moteur à combustion (11) et au moins un refroidisseur supplémentaire (1, 2) agencé dans une position en amont du radiateur (3) par rapport à ladite direction de flux prévue à travers le passage de flux (5), dans lequel l'agencement de ventilateur comprend au moins un ventilateur entraîné électriquement supplémentaire (4), dans lequel l'au moins un ventilateur entraîné électriquement supplémentaire (4) est agencé dans le passage de flux (5) dans une position en aval du radiateur (3) et en amont du ventilateur de radiateur (10) par rapport à ladite direction de flux prévue à travers le passage de flux (5) et dans lequel l'au moins un ventilateur entraîné électriquement supplémentaire (4) est configuré pour fournir un flux d'air à travers une partie restreinte (18) du passage de flux (5) et le module de refroidissement durant certaines occasions lorsque le ventilateur de radiateur (10) n'est pas en fonctionnement, dans lequel l'au moins un ventilateur entraîné électriquement supplémentaire (4) est capable de fournir un flux d'air à travers la partie restreinte (18) dans une direction opposée à la direction de flux prévue à travers le passage de flux (5) et dans lequel le refroidisseur supplémentaire est un refroidisseur d'air de suralimentation (2) refroidissant de l'air de suralimentation délivré au moteur à combustion (11), dans lequel le ventilateur entraîné électriquement (4) est configuré pour fournir un flux d'air à travers la partie restreinte (18) du passage de flux (5) et le refroidisseur d'air de suralimentation (2) dans la direction opposée à la direction de flux prévue à travers le passage de flux (5) durant une occasion lorsqu'il existe un risque de formation de glace dans le refroidisseur d'air de suralimentation (2), dans lequel le véhicule comprend en outre une unité de commande (13) configurée pour recevoir des informations à partir d'un capteur de température (20) à propos de la température ambiante ou de la température de l'air de suralimentation sortant du refroidisseur d'air de suralimentation (2) et activer l'au moins un ventilateur entraîné électriquement supplémentaire (4) de sorte qu'il fournisse le flux d'air à travers la partie restreinte (18) dans la direction opposée à la direction de flux prévue à travers le passage de flux (5) au cas où la température reçue indique un risque de formation de glace dans le refroidisseur d'air de suralimentation (2), dans lequel l'agencement de ventilateur comprend au moins un élément configuré pour fournir un canal d'air (18) définissant ladite partie restreinte du passage de flux (5) et le module de refroidissement comprend au moins en outre un refroidisseur supplémentaire (1, 2), et dans lequel ledit canal d'air (18) dans le passage de flux (5) est défini par un élément annulaire (16) agencé dans un espace entre lesdits deux refroidisseurs (1, 2).

2. Véhicule selon la revendication 1, **caractérisé en ce que** l'au moins un ventilateur entraîné électriquement supplémentaire (4) est agencé dans le passage de flux (5) dans une position plus proche du radiateur (3) que du ventilateur de radiateur (10).

3. Véhicule selon la revendication 1 ou 2, **caractérisé en ce que** l'au moins un ventilateur entraîné électriquement supplémentaire (4) est agencé dans une partie du passage de flux (5) définie par un couvercle de ventilateur (10a) du ventilateur de radiateur (10).

4. Véhicule selon l'une quelconque des revendications précédentes, **caractérisé en ce que** ledit canal d'air (18) dans le passage de flux (5) est en outre défini par un élément annulaire (17) agencé dans un espace entre le refroidisseur supplémentaire (2) et le radiateur (3).

5. Véhicule selon l'une quelconque des revendications précédentes, **caractérisé en ce que** ledit canal d'air (18) dans le passage de flux (5) est en outre défini par un couvercle de ventilateur (4b) de l'au moins un ventilateur entraîné électriquement supplémentaire (4).

6. Véhicule selon l'une quelconque des revendications précédentes, **caractérisé en ce que** l'au moins un ventilateur entraîné électriquement supplémentaire (4) est réversible dans son sens de rotation.
